# EUROPÄISCHE PATENTSCHRIFT

(11) **EP 0 879 276 B1**
(45) Veröffentlichungstag und Bekanntmachung des Hinweises auf die Patenterteilung: **07.11.2001**
(21) Anmeldenummer: 96944622.8
(22) Anmeldetag: 20.12.1996
(51) Int. Cl.: C11D 3/48, A23C 7/02

(54) **VERFAHREN ZUM REINIGEN UND DESINFIZIEREN VON MELKANLAGEN**
PROCESS FOR CLEANING AND DISINFECTING OF MILKING PLANTS
PROCEDE POUR NETTOYER ET DESINFECTER DES INSTALLATIONS DE TRAITE

(30) Priorität: 09.01.1996 DE 19600475
(43) Veröffentlichungstag der Anmeldung: 25.11.1998
(73) Patentinhaber: HENKEL-ECOLAB GmbH & CO. OHG, 40589 Düsseldorf (DE)
(72) Erfinder: BRAGULLA, Siegfried, D-40789 Monheim (DE); DE LOOS, Gerard, NL-2181 GT Hillegom (NL)
(74) Vertreter: Hase, Christian, Dr.
(86) Internationale Anmeldenummer: EP9605783
(87) Internationale Veröffentlichungsnummer: WO9725403

(56) Entgegenhaltungen:
- EP-A- 0 245 928
- WO-A-91/18080
- DATABASE WPI Section Ch, Week 8040 Derwent Publications Ltd., London, GB; Class D25, AN 80-71261C XP002031907 & SE 7 808 047 A (NORDTEND AB) , 25.Februar 1980
- DATABASE WPI Section Ch, Week 9117 Derwent Publications Ltd., London, GB; Class D22, AN 91-119767 XP002031908 & HU 54 468 A (ZSUGA M) , 28.März 1991

## Beschreibung

Die Erfindung betrifft ein Verfahren zum gleichzeitigen Reinigen und Desinfizieren von Melkanlagen. Hierbei wird auf bisher üblicherweise eingesetzte keimtötende Substanzen verzichtet, deren Reste oder Reaktionsprodukte in der Milch oder im Abwasser unerwünscht sind. Beispiele derartiger bedenklicher Desinfektionsmittel, auf die aufgrund der vorliegenden Erfindung nunmehr verzichtet werden kann, sind Halogene, Halogenverbindungen, Alkylamine, quartäre Ammoniumverbindungen, quartäre Phosphoniumverbindungen, Persäuren und Aldehyde.

Melkanlagen, die zur Gewinnung der Milch von Kühen, Büffeln, Schafen und/oder Ziegen benutzt werden, müssen ständig in sauberem und keimarmem Zustand gehalten werden. Anderenfalls ist es nicht möglich, keimarme, qualitativ hochwertige Milch zu erhalten:-Unsaubere, verkeimte Melkanlagen stellen zusätzlich ein hohes Infektionsrisiko für die mit der Anlage zu melkenden Tiere dar. Speziell über das Melkzeug werden bei schlecht gereinigten und desinfizierten Melkanlagen Mastitiserreger von einem Tier auf das nachfolgende übertragen, wodurch die Ausbreitung von Mastitis gefördert wird.

Daher ist es notwendig, die Melkanlagen nach jedem Melkvorgang gründlich zu reinigen und zu desinfizieren. Hierzu werden bisher üblicherweise alkalische Reinigungs- und Desinfektionsmittel zur Entfernung der Milchreste sowie zur Desinfektion und im Wechsel hierzu saure Reinigungsmittel zur Entfernung von Wasserhärtebelägen verwendet. Diese Reinigungsmittel werden als wäßrige Lösungen eingesetzt, wobei die Konzentrate zum Ansetzen der Anwendungslösungen pulverförmig oder flüssig sein können.

Im allgemeinen werden Melkanlagen 2 mal täglich gereinigt, wobei man üblicherweise 12 bis 13 mal pro Woche alkalisch reinigt und desinfiziert und 1 bis 2 mal pro Woche eine saure Reinigung durchführt. In Gebieten mit hoher Wasserhärte kann eine saure Reinigung auch öfter, bis zu 1 mal täglich erforderlich sein. In solchen Fällen setzt man also abwechselnd alkalische Reinigung und Desinfektion sowie die saure Reinigung ein.

Die alkalischen Reinigungsmittel bestehen aus bekannten Alkalitätsträgern wie beispielsweise Alkalimetallhydroxiden, -carbonaten, -phosphaten, -silicaten in Abmischung mit Komplexbildnern, Dispergiermitteln und Tensiden. Die Desinfektionskomponente in den alkalischen Reinigungs- und Desinfektionsmitteln nach dem Stand der Technik kann bestehen aus: Aktivchlor in Form von anorganischem Chlor wie beispielsweise Chlorbleichlauge oder in Form eines organischen Chlorträgers wie zum Beispiel Chloramin oder chlorhaltigen Isocyanuraten, oder aus Alkylaminen, quartären Ammonium- und/oder Phosphoniumverbindungen.

Der Nachteil der Verwendung dieser Desinfektionskomponenten liegt in möglichen Rückständen in den Melkanlagen, falls nicht ordnungsgemäß alle Reinigungs- und Desinfektionsmittelreste mit Frischwasser aus der Anlage ausgespült werden. Insbesondere bei der Desinfektion mit Aktivchlor können sich organische Chlorverbindungen bilden, die mit dem Reinigungswasser über die Gülle in die Umwelt gelangen. Im ungünstigsten Fall findet man chlororganische Verbindungen sogar in der gemolkenen Milch und den daraus hergestellten Produkten. Da derartige Stoffe toxikologisch sehr kritisch eingestuft werden, ist ihr Eintrag in die Milch unbedingt zu vermeiden. Mögliche Rückstände von alternativen Desinfektionssubstanzen wie beispielsweise Alkylaminen, quartären Ammonium- oder Phosphoniumverbindungen oder auch Aldehyden sind in der Milch zumindest aus technologischen Gründen unerwünscht. Schon geringe Rückstandsmengen dieser Substanzen stören die Labgallertenbildung der Milch bei der Weiterverarbeitung zu beispielsweise Joghurt, Käse, Kefir und anderen Säuerungsprodukten. Ein weiterer Nachteil des herkömmlichen Einsatzes der alkalischen und sauren Reinigungsmittel besteht darin, daß deren stark alkalische bzw. stark saure pH-Werte beim Ablassen der Lösungen zu Korrosion im Leitungssystem führen können. Obwohl diese herkömmlichen Reinigungs- und Desinfektionsverfahren zu sauberen und keimarmen Melkanlagen führen, besteht aus den angeführten toxikologischen und technologischen Gründen ein Bedarf nach alternativen Reinigungs- und Desinfektionsverfahren, die die genannten Nachteile nicht aufweisen. Die Erfindung stellt sich die Aufgabe, ein derartiges verbessertes Verfahren bereitzustellen.

Im Stand der Technik sind Verbindungen und Verbindungsklassen bekannt, die beim Einsatz in Reinigungsmitteln eine desinfizierende Wirkung entfalten. Beispielsweise gibt das Kapitel 14 des Buches S. S. Block: "Desinfection, Sterilization and Preservation", 4. Auflage, Lea & Febinger, Philadelphia & London, 1991 eine Übersicht über saure-anionische oberflächenaktive Verbindungen mit desinfizierender Wirkung. Beispielsweise genannt werden Dodecylbenzolsulfonsäure, sulfonierte Ölsäure, sulfonierte Octansäure, sulfonierte Octadecansäure, sulfonierte Tallölfettsäure, Naphthalensulfonsäure sowie deren Salze.

Die DE-A-42 25 626 beschreibt die Verwendung von Ethercarbonsäuren der allgemeinen Formel R-(OC₂H₄)ₙ-OCH₂-COOH als keimtötende Substanzen, wobei R für einen Alkylrest-mit etwa 4 bis 10 Kohlenstoffatomen und n für eine Zahl im Bereich von etwa 2 bis 8 steht. Diese Ethercarbonsäuren können zusammen mit geeigneten Tensiden in sauren Reinigern mit desinfizierender Wirkung eingesetzt werden.

Aus der DE-A-32 40 688 ist die Verwendung von Alkylmonophosphonsäuren als keimtötende Substanzen bekannt. Die Alkylmonophosphonsäuren weisen 4 bis 12, vorzugsweise 8 bis 10 C-Atome in der Alkylkette auf. Besonders bevorzugt sind 1-Octan- und 1-Decanphosphonsäure. Sie können in Verbindung mit anionischen oder bevorzugt mit nichtionischen Tensiden in desinfizierenden sauren Reinigungsmitteln eingesetzt werden.

Weiterhin ist bekannt, daß bestimmte Carbonsäuren wie beispielsweise Undecylensäure eine keimtötende Wirkung haben. Obwohl derartige desinfizierend wirkende Verbindungen in sauren Reinigern für Haushalt und Gewerbe bereits eingesetzt werden, ist ihre Anwendung in einem Verfahren zur Reinigung und Desinfektion von Melkanlagen bisher nicht beschrieben. Die Erfindung stellt ein Reinigungs-und Desinfektionsverfahren von Melkanlagen zur Verfügung, bei dem die Desinfektion nicht mehr wie bisher während der alkalischen Reinigung, sondern im sauren Reinigungsschritt erfolgt. Demnach liegt es im Wesen der Erfindung, daß bei der alkalischen Reinigung auf den Einsatz der eingangs angeführten üblichen, jedoch toxikologisch und technologisch bedenklichen Desinfektionskomponenten verzichtet werden kann. Das Gesamtreinigungsverfahren wird hierdurch ökologisch, toxikologisch und technologisch sicherer, da die nunmehr einzusetzenden Desinfektionskomponenten die eingangs genannten Nachteile nicht aufweisen.

In der WO-A-91/18080 wird ein Gemisch zur Reinigung und Desinfektion von Melkgerätschaften beschrieben, welches Reinigungs- und Desinfektionsmittel in einer einzigen Phase vereinigt. Das Gemisch enthält 20 bis 80 Gew.-% mindestens einer starken Säure, vorzugsweise Phosphorsäure, und 0,5 bis 10 Gew.-% mindestens eines schwach schäumenden anionischen Tensids. Als anionische Tenside kommen beispielsweise Alkylbenzolsulfonate, Laurylsulfat und Alkansulfonate in Frage. Diese Tenside spielen hauptsächlich eine desinfizierende Rolle als Bakterizid, aber auch als Viruzid. Zusätzlich kann das Gemisch ein Salz einer Fettsäure, vorzugsweise mit 11 C-Atomen, enthalten, welches gleichfalls als bakterizides oder fungizides Desinfektionsmittel dient. Zur Hemmung der Korrosion von Gummi und nichtrostendem Stahl kann das Gemisch Oktylphosphonsäure enthalten.

Das Derwent-Referat AN80-71261C der SE-A-7808047 beschreibt ein Reinigungsverfahren für Molkerei-Gerätschaften, wobei diese alternierend mit einem alkalischen und einem sauren Reinigungsmitel gereinigt werden. Das alkalische Mittel enthält schwach schäumende nichtionische und schwach schäumende amphotere Tenside. Das saure Mittel enthält eine starke organische oder anorganische Säure oder deren Salze.

Die vorliegende Erfindung betrifft demgegenüber ein Verfahren zum Reinigen und Desinfizieren von Melkanlagen durch alkalische und saure Reinigung, dadurch gekennzeichnet, daß man die Melkanlage mindestens einmal täglich abwechselnd mit
a) einem sauren Reinigungsmittel und
b) einem sauren Reinigungsmittel mit desinfizierender Wirkung, das 0,1 bis 15 Gew.-%, bezogen auf das mit Wasser zu verdünnende Reinigungsmittel, einer oder mehrerer der folgenden Verbindungen mit mikrobizider Wirkung enthält: b1) Aniontenside, b2) Fettsäuren, b3) Alkylphosphonsäuren, b4) Ethercarbonsäuren, reinigt, wobei das alkalische Reinigungsmittel a) und das saure Reinigungsmittel b) frei sind von Halogenen, Halogenverbindungen, Alkylaminen, quartären Ammoniumverbindungen, quartären Phosphoniumverbindungen, Persäuren und Aldehyden und wobei die beiden Reiniger in einer derartigen Menge und Konzentration eingesetzt werden, daß sie sich nach der Anwendung in einem Pufferbehälter gegenseitig nahezu neutralisieren.

Dabei wird die Melkanlage wie bisher nach jedem Melkzyklus, d.h. in der Regel 2 mal täglich gereinigt. Wie bisher ist es möglich häufiger alkalisch als sauer zu reinigen. Da nach dem erfindungsgemäßen Verfahren nur die saure Reinigung eine Desinfektion der Melkanlage bewirkt, reinigt man die Melkanlage jeweils mindestens einmal täglich abwechselnd mit einem alkalischen Reinigungsmittel der Gruppe a) und einem sauren und desinfizierenden Reinigungsmittel der Gruppe b). Beispielsweise kann man nach dem morgentlichen Melken das alkalische Reinigungsmittel und nach dem abendlichen Melken das desinfizierende saure Reinigungsmittel für die Reinigung verwenden, oder umgekehrt.

Die in dem sauren Reinigungsmittel enthaltenen Verbindungen mit mikrobizider Wirkung der Gruppe b1) können beispielsweise ausgewählt sein aus aromatischen Sulfonsäuren, Alkylsulfonsäuren, Alkylethersulfonsäuren, sauren Fettalkoholschwefelsäureestern und sulfonierten Fettsäuren. Beispiele derartiger Verbindungen sind Alkylbenzolsulfonsäuren wie beispielsweise Dodecylbenzolsulfonsäure, Naphthalinsulfonsäure, Alkansulfonsäuren wie beispielsweise 1-Octansulfonsäure sowie sulfonierte Fettsäuren oder Fettsäuregemische wie beispielsweise sulfonierte Ölsäure, sulfonierte 9-Octadecansäure oder sulfonierte Tallölfettsäure. Dabei ist es generell günstiger, wenn die hydrophile Gruppe endständig steht. Die Verbindungen können jedoch durchaus auch eine nichtendständige hydrophile Gruppe aufweisen, wie die Beispiele der sulfonierten Fettsäuren oder der sekundären Alkansulfonate zeigen.

Die in dem sauren Reinigungsmittel einsetzbaren Verbindungen mit mikobizider Wirkung der Gruppe b2) sind vorzugsweise ausgewählt aus gesättigten oder ungesättigten Fettsäuren mit 8 bis 22 C-Atomen, wobei geradkettige Fettsäuren bevorzugt sind. Insbesondere lassen sich hierfür gesättigte oder ungesättigte Carbonsäuren mit 8 bis 11 C-Atomen verwenden, wobei Undecansäure und Undecylensäure besonders bevorzugt sind.

Die mikrobiziden Verbindungen der Gruppe b3) wählt man vorzugsweise aus aus Alkylmonophosphonsäuren mit 4 bis 12 C-Atomen in der Alkylgruppe, insbesondere aus solchen mit 8 bis 10 C-Atomen in der Alkylgruppe. Besonders bevorzugte Beispiele hierfür sind die 1-Octan- und 1-Decan-phosphonsäure. Andere Alkylmonophosphonsäuren wie beispielsweise 1-Butan-, 1-Hexan- oder 1-Dodecanphosphonsäure sind jedoch ebenfalls verwendbar.

Als desinfizierend wirkende Verbindungen können die sauren Reiniger weiterhin Ethercarbonsäuren der Gruppe b4) enthalten, wobei diese vorzugsweise ausgewählt sind aus Ethercarbonsäuren der allgemeinen Formel R-(OC₂H₄)ₙ-OCH₂-COOH, in der R ein Alkylrest mit 4 bis 10 C-Atomen und n eine Zahl im Bereich 2 bis 8 bedeuten. Zur Herstellung derartiger Ethercarbonsäuren kann man die entsprechenden Alkanole mit dem Rest R zunächst ethoxylieren und anschließend mit Chloressigsäure umsetzen. Da bei der Ethoxylierung in der Regel keine Reinsubstanzen mit einem definierten Wert für n entstehen, sondern Substanzgemische von Ethoxylierungsprodukten mit unterschiedlichen Werten von n in den einzelnen Komponenten der Gemische, liegen die Ethercarbonsäuren in der Regel als entsprechende Mischprodukte vor.

Der saure Reiniger b) kann dabei eine oder mehrere Substanzen mit desinfizierender Wirkung enthalten, die alle der selben Substanzgruppe b1), b2), b3) oder b4) zuzuordnen sind. Die desinfizierende Wirkung kann jedoch dadurch noch gesteigert werden, daß man desinfizierend wirkende Substanzen aus unterschiedlichen Gruppen b1) bis b4) miteinander kombiniert. Dabei kann der saure Reiniger b) ein pulverförmiges, tablettenförmiges, pastenförmiges oder flüssiges Produkt darstellen. Aus Gründen der Wirkstoffkonzentration ist ein pulver- oder tablettenförmiges Produkt, aus Gründen der bequemeren Handhabung ein Flüssigprodukt bevorzugt. Vorzugsweise enthalten diese Produkte insgesamt etwa 0,1 bis 10 Gew.-% einer oder mehrerer der mikrobiziden Verbindungen der Gruppen b1) bis b4). Bevorzugte Mengenanteile sind: für Verbindungen der Gruppe b1) 0,2 bis 5 Gew.-%, für Verbindungen der Gruppe b2) 0,2 bis 2 Gew.-%, für Verbindungen der Gruppe b3) 0,2 bis 2 Gew.-% und für Verbindungen der Gruppe b4) 0,5 bis 10 Gew.-%. Pulverprodukte und tablettenförmige Produkte setzt man in der Regel als etwa 0,1 bis 2 Gew-%ige wäßrige Lösungen, Flüssigprodukte als etwa 0,2 bis 5 Gew.-%ige wäßrige Lösungen ein. Die Einsatzkonzentrationen für pastenförmige Produkte liegen dazwischen. Die Gesamtkonzentrationen der mikrobizid wirkenden Verbindungen der Gruppen b1) bis b4) in der Anwendungslösung liegen dann im Bereich zwischen etwa 0,001 und etwa 5 g/l. Bevorzugte Konzentrationsbereiche in den Anwendungslösungen liegen für die mikrobizid wirkenden Stoffe der Gruppe b1) im Bereich von etwa 0,005 bis 0,5 g/l, für die Alkylphosphonsäuren der Gruppe b3) im Bereich von etwa 0,005 bis 0,5, vorzugsweise 0,02 bis 0,2 g/l und für die Verbindungen der Gruppen b2) oder b4) im Bereich von 0,002 bis 2 g/l.

Wenn der saure Reiniger b) ein pulver- oder tablettenförmiges Produkt darstellt, so ist dies vorzugsweise zusammengesetzt aus etwa 20 bis etwa 80 Gew.-% einer beim Auflösen in Wasser sauer reagierenden organischen oder anorganischen Substanz, etwa 0,1 bis etwa 5 Gew.-% nichtionischen Tensiden, etwa 0,1 bis etwa 10 Gew.-%, vorzugsweise etwa 0,1 bis 5 Gew.-% einer oder mehrerer mikrobizider Verbindungen der Gruppen b1) bis b4), wobei der Rest zu 100 Gew.-% beispielsweise aus Natriumsulfat und/oder weiteren Wirk- oder Hilfsstoffen bestehen kann. Da der Reiniger ein Pulverprodukt darstellen soll, muß die beim Auflösen in Wasser sauer reagierende organische oder anorganische Substanz einen Feststoff darstellen. Als derartige anorganische Substanzen kommen beispielsweise saure Salze wie Dihydrogenphosphate oder Hydrogensulfate in Betracht. Einsetzbare organische Substanzen sind beispielsweise Carbonsäuren wie Weinsäure oder Citronensäure oder beispielsweise Sulfonsäuren wie Amidosulfonsäure. Als nichtionische Tenside wählt man vorzugsweise Anlagerungsprodukte von Ethylenoxid und/oder Propylenoxid an Fettalkohole, Fettamine oder Fettsäuren mit 12 bis 18 C-Atomen im Alkylrest oder Fettsäureester von Polyolen, insbesondere von Zuckern wie beispielsweise Glukose. Anlagerungsprodukte von Ethylenoxid und/oder Propylenoxid an Fettalkohole sind besonders bevorzugt. Beispiele derartiger Anlagerungsprodukte sind Anlagerungsprodukte von im Mittel 8 oder im Mittel 6 Ethylenoxideinheiten an Fett-alkoholgemische mit 12 bis 18 C-Atomen im Alkylrest. Weitere Beispiele sind Anlagerungsprodukte von Ethylenoxid und Propylenoxid an derartige Fettalkohole, beispielsweise ein Anlagerungsprodukt von 5 Mol Ethylenoxid und 4 Mol Propylenoxid an ein Fettalkoholgemisch mit 12 bis 14 C-Atome im Alkylrest. Ein ebenfalls einsetzbares nichtionisches Tensid ist ein Anlagerungsprodukt von 5 Mol Ethylenoxid an Oleylalkohol.

Wünscht man den sauren Reiniger b) als Flüssigprodukt zu konfektionieren, setzt man diesen vorzugsweise zusammen aus etwa 20 bis etwa 80 Gew.-% Phosphorsäure, Schwefelsäure Ameisensäure, Essigsäure, Glykolsäure, Milchsäure, Citronensäure und/oder Methansulfonsäure jeweils als solche, als Lösung ineinander oder in Form einer wäßrigen Lösung mit einem Säuregehalt von mindestens 5 Gew.-%, etwa 0,1 bis etwa 5 Gew.-% nichtionische Tenside wie vorstehend beschrieben, etwa 0,1 bis etwa 10 Gew.-%, vorzugsweise etwa 0,1 bis etwa 5 Gew.-% einer oder mehrerer mikrobizider Verbindungen der Gruppen b1) bis b4), wobei der Rest zu 100 Gew.-% Wasser oder eine wäßrige Lösung weiterer Wirk- oder Hilfsstoffe darstellt. Flüssige Säuren können dabei als solche einzeln oder im Gemisch miteinander eingesetzt werden. Feste Säuren wie beispielsweise Citronensäure können in einer anderen flüssigen Säure oder in Wasser gelöst vorliegen. Setzt man Säuren als wäßrige Lösungen ein, sollen diese einen Säuregehalt von mindestens 5 Gew.-% aufweisen, um in der verdünnten Anwendungslösung noch eine ausreichende Säurekonzentration zu erzielen. Wünscht man aus Gründen des Umweltschutzes einen phosphatfreien sauren Reiniger einzusetzen, enthält dieser bevorzugt eine Kombination mehrerer der genannten organischen Säuren. Beispiele hierfür sind Mischungen aus Methansulfonsäure, Citronensäure und Ameisensäure, Essigsäure, Milchsäure und Citronensäure, Essigsäure, Glykolsäure und Methansulfonsäure sowie weitere Kombinationen. Gegebenenfalls setzt man diesen Säurekombinationen so viel Wasser zu, daß eine klare Lösung entsteht.

Die für die alkalische Reinigung einsetzbaren alkalischen Reiniger der Gruppe a) können pulverförmige, tablettenförmige, pastenförmige oder flüssige Produkte darstellen. Sie enthalten keine der erfindungsgemäß zu vermeidenden Desinfektionsmittel, entsprechen aber in ihrer Zusammensetzung ansonsten den bisher üblichen Produkten.

Pulverprodukte, die auch zu Tabletten verpreßt oder unter Einwirkung von Mikrowellen gesintert sein können, können beispielsweise enthalten: etwa 5 bis etwa 45 Gew.-% Buildersubstanzen, beispielsweise ausgewählt aus oligomeren oder polymeren Phosphaten, Phosphonaten, Polyacrylaten, Nitrilotriacetat, Citrat und/oder Glukonat, bis zu etwa 30 Gew.-% wasserlösliche Silicate, bis zu jeweils 5 Gew.-% nichtionische Tenside und Antischaummittel sowie als Rest zu 100 Gew.-% Alkalimetallcarbonate, Alkalimetallhydroxide und/oder weitere Wirk- oder Hilfsstoffe. Flüssigprodukte können beispielsweise bestehen aus: etwa 5 bis etwa 40 Gew.-% Alkalimetallhydroxid, bis zu etwa 15 Gew.-% Silicate, vorzugsweise Kaliumsilicate, bis zu 15 Gew.-% Komplexbildner wie beispielsweise Phosphonate, Citrate, Glukonate oder Nitrilotriacetat, jeweils bis zu etwa 5 Gew.-% nichtionische Tenside und Entschäumer und als Rest zu 100 Gew.-% Wasser oder eine wäßrige Lösung weiterer Wirk- oder Hilfsstoffe.

Zur Anwendung werden pulver- oder tablettenförmige Produkte vorzugsweise als etwa 0,1 bis etwa 2 Gew.-%ige wäßrige Lösung, Flüssigprodukte als etwa 0,2 bis etwa 5 Gew.-%ige wäßrige Lösung eingesetzt. Die Einsatzkonzentrationen für pastenförmige Produkte liegen dazwischen.

Man führt das Reinigungsverfahren derart durch, daß die Reinigung der Melkanlage mit dem alkalischen Reiniger a) und dem sauren Reiniger b) abwechselnd erfolgt. Dabei setzt man in einem weiteren Aspekt der Erfindung die beiden Reiniger in einer derartigen Menge und Konzentration ein, daß sie sich nach der Anwendung in einem Pufferbehälter vor Ablassen in das Kanalsystem gegenseitig nahezu neutralisieren, wenn man in dem Pufferbehälter die gebrauchten Lösungen aus mindestens einer alkalischen und mindestens einer sauren Reinigung gemeinsam auffängt. Als "nahezu neutralisiert" wird hierbei eine Mischung aufgefaßt, deren pH-Wert zwischen etwa 6 und etwa 10 liegt. Korrosive Belastungen des Kanalsystems können hierdurch vermieden werden. Die Überwachung der Neutralisation und die pH-Wert-abhängige Abgabe an das Kanalsystem kann dabei automatisiert werden. Vorzugsweise setzt man zur pH-Wert-Kontrolle pH-sensitive Elektroden ein.

Die mikrobizide Wirkung der einzusetzenden sauren Reiniger kann nach unterschiedlichen Prüfverfahren bestimmt werden. Beispielsweise genannt seien die Prüfrichtlinien zur Verleihung des DLG-Gütezeichens für Reinigungs- und Desinfektionsmittel für die Milchwirtschaft, die von der Deutschen Landwirtschafts-Gesellschaft (DLG e.V., Eschbomer Landstr. 122, D-60489 Frankfurt) herausgegeben wurde. Dabei kann die Prüfung beispielsweise nach den Prüfrichtlinien des Standes vom 15.01.1991 erfolgen. Weitere Prüfrichtlinien wurden vom Europarat 1987 unter dem Titel "Prüfmethoden für die antimikrobielle Wirksamkeit von Desinfektionsmitteln in der Lebensmittelhygiene" (ISBN 92-871-01006-9) herausgegeben. Die in dem erfindungsgemäßen Verfahren einsetzbaren sauren Reiniger sollten in der Lage sein, in einem Suspensionstest nach diesen Prüfrichtlinien eine Reduktion der Keimzahl um mindestens 3, besser um 5 Zehnerpotenzen zu erzielen.

Praxisnäher ist es, die desinfizierende Wirkung des Reinigungsverfahrens direkt in dem milcherzeugenden Betrieb zu überprüfen, indem man die Keimzahl in der Milch bestimmt. Nachstehend sind Beispiels-Rezepturen angegeben, die im praktischen Einsatz zur Reinigung einer Melkanlage zu Keimzahlen unter 10 000 pro ml Milch geführt haben. Dabei wurde die Melkanlage jeweils einmal täglich mit dem alkalischen und dem sauren Reiniger gereinigt, die jeweils 0,5 Gew.-%ig in Wasser eingesetzt wurden:
Alkalische Reiniger
   40 - 70 Gew.-% Natronlauge (50 %ige Lösung)
   0,2 - 0,5 Gew.-% nichtionische Tenside (Fettalkoholethoxylate)
   0,2 - 0,5 Gew.-% Phosphonat (Na-Salz der 1-Hydroxyethan-1,1-diphosphonsäure)
   Rest: vollentsalztes Wasser
Desinfizierender saurer Reiniger
   30 - 50 Gew.-% Phosphorsäure (100 %ig)
   0,2 - 0,5 Gew.-% nichtionische Tenside (Fettalkoholethoxylate)
   1 - 3 Gew.-% anionische Tenside (Alkylbenzolsulfonate)
   0,2 - 1 Gew.-% n-Octyl-1-Phosphonsäure
   Rest: vollentsalztes Wasser

## Patentansprüche

1. Verfahren zum Reinigen und Desinfizieren von Melkanlagen durch alkalische und saure Reinigung, **dadurch gekennzeichnet, daß** man die Melkanlage mindestens einmal täglich abwechselnd mit
a) einem alkalischen Reinigungsmittel und
b) einem sauren Reinigungsmittel mit desinfizierender Wirkung, das 0,1 bis 15 Gew.-%, bezogen auf das mit Wasser zu verdünnende Reinigungsmittel, einer oder mehrerer der folgenden Verbindungen mit mikrobizider Wirkung enthält: b1) Anionentenside, b2) Fettsäuren, b3) Alkylphosphonsäuren, b4) Ethercarbonsäuren,
reinigt, wobei das alkalische Reinigungsmittel a) und das saure Reinigungsmittel b) frei sind von Halogenen, Halogenverbindungen, Alkylaminen, quartären Ammoniumverbindungen, quartären Phosphoniumverbindungen, Persäuren und Aldehyden und wobei die beiden Reiniger in einer derartigen Menge und Konzentration eingesetzt werden, daß sie sich nach der Anwendung in einem Pufferbehälter gegenseitig nahezu neutralisieren.

2. Verfahren nach Anspruch 1, **dadurch gekennzeichnet, daß** der saure Reiniger der Gruppe b) mikrobizide Tenside der Gruppe b1) enthält, die ausgewählt sind aus aromatischen Sulfonsäuren, Alkylsulfonsäuren, Alkylethersulfonsäuren, sauren Fettalkohol-Schwefelsäureestern und sulfonierten Fettsäuren.

3. Verfahren nach Anspruch 1, **dadurch gekennzeichnet, daß** der saure Reiniger der Gruppe b) mikrobizide Verbindungen der Gruppe b2) enthält, die ausgewählt sind aus gesättigten oder ungesättigten Fettsäuren mit 8 bis 22 C-Atomen, vorzugsweise aus gesättigten oder ungesättigten Carbonsäuren mit 8 bis 11 C-Atomen.

4. Verfahren nach Anspruch 1, **dadurch gekennzeichnet, daß** der saure Reiniger der Gruppe b) mikrobizide Verbindungen der Gruppe b3) enthält, die ausgewählt sind aus Alkylmonophosphonsäuren mit 4 bis 12 C-Atomen.

5. Verfahren nach Anspruch 1, **dadurch gekennzeichnet, daß** der saure Reiniger der Gruppe b) mikrobizide Verbindungen der Gruppe b4) enthält, die ausgewählt sind aus Ethercarbonsäuren der allgemeinen Formel R-(OC₂H₄)ₙ-OCH₂COOH, in der R ein Alkylrest mit 4 bis 10 C-Atomen und n eine Zahl im Bereich 2 bis 8 bedeuten.

6. Verfahren nach einem oder mehreren der Ansprüche 1 bis 5, **dadurch gekennzeichnet, daß** der saure Reiniger b) ein pulverförmiges, tablettenförmiges, pastenförmiges oder flüssiges Produkt darstellt, das insgesamt 0,1 bis 10 Gew.-% einer oder mehrerer der mikrobiziden Verbindungen der Gruppen b1) bis b4) enthält und das zur Anwendung im Falle eines Pulverprodukts als 0,1 bis 2 gew.-%ige wäßrige Lösung, im Falle eines Flüssigprodukts als 0,2 bis 5 gew.-%ige wäßrige Lösung eingesetzt wird.

7. Verfahren nach Anspruch 6, **dadurch gekennzeichnet, daß** der saure Reiniger b) ein pulver- oder tablettenförmiges Produkt darstellt, das 20 bis 80 Gew.-% einer beim Auflösen in Wasser sauer reagierenden organischen oder anorganischen Substanz, 0,1 bis 5 Gew.-% nichtionische Tenside, 0,1 bis 5 Gew.-% einer oder mehrerer mikrobizider Verbindungen der Gruppen b1) bis b4) und als Rest zu 100 Gew.-% Natriumsulfat und/oder weitere Wirk- oder Hilfsstoffe enthält.

8. Verfahren nach Anspruch 6, **dadurch gekennzeichnet, daß** der saure Reiniger b) ein Flüssigprodukt darstellt, das 20 bis 80 Gew.-% Phosphorsäure, Schwefelsäure, Ameisensäure, Essigsäure, Glykolsäure, Milchsäure, Citronensäure und/oder Methansulfonsäure jeweils als solche, als Lösung ineinander oder in Form einer wäßrigen Lösung mit einem Säuregehalt von mindestens 5 Gew.-%, 0,1 bis 5 Gew.-% nichtionische Tenside, 0,1 bis 5 Gew.-% einer oder mehrerer mikrobizider Verbindungen der Gruppen b1) bis b4) und als Rest zu 100 Gew.-% Wasser oder eine wäßrige Lösung weiterer Wirk- oder Hilfsstoffe enthält.

9. Verfahren nach einem oder mehreren der Ansprüche 1 bis 8, **dadurch gekennzeichnet, daß** der alkalische Reiniger der Gruppe a) ein pulverförmiges, tablettenförmiges, pastenförmiges oder flüssiges Produkt darstellt und im Falle eines Pulverprodukts 5 bis 45 Gew.-% Buildersubstanzen ausgewählt aus oligomeren oder polymeren Phosphaten, Phosphonaten,Polyacrylaten,Nitrilotriacetat, Citrat und/oder Gluconat, bis zu 30 Gew.-% Silicate, bis zu jeweils 5 Gew.-% nichtionische Tenside und Antischaummittel sowie als Rest zu 100 Gew.-% Alkalimetallcarbonate, Alkalimetallhydroxide und/oder weitere Wirk- oder Hilfsstoffe, im Falle eines Flüssigprodukts 5 bis 40 Gew.-% Alkalimetallhydroxide, bis zu 15 Gew.-% Silicate, bis zu 15 Gew.-% Komplexbildner, jeweils bis zu 5 Gew.-% nichtionische Tenside und Entschäumer und als Rest zu 100 Gew.-% Wasser oder eine wäßrige Lösung weiterer Wirk- oder Hilfsstoffe enthält,
wobei Pulverprodukte zur Anwendung als 0,1 bis 2 gew.-%ige wäßrige Lösung, Flüssigprodukte als 0,2 bis 5 gew.-%ige Lösung eingesetzt werden.

## Claims

1. A process for cleaning and disinfecting milking plants buildings by alkaline and acidic cleaning, **characterized in that** the plant is alternately cleaned daily with
a) an alkaline cleaning preparation and
b) an acidic cleaning preparation with a disinfecting effect containing 0.1 to 15% by weight, based on the cleaning preparation to be diluted with water, of one or more of the following microbicidal compounds: b1) anionic surfactants, b2) fatty acids, b3) alkyl phosphonic acids, b4) ether carboxylic acids,
the alkaline cleaning preparation a) and the acidic cleaning preparation b) being free from halogens, halogen compounds, alkylamines, quaternary ammonium compounds, quaternary phosphonium compounds, per acids and aldehydes and the two cleaners being used in such a quantity and concentration that they virtually neutralize one another in a buffer vessel after application.

2. A process as claimed in claim 1, **characterized in that** the acidic cleaner of group b) contains microbicidal surfactants of group b1) selected from aromatic sulfonic acids, alkyl sulfonic acids, alkyl ether sulfonic acids, acidic fatty alcohol/sulfuric acid esters and sulfonated fatty acids.

3. A process as claimed in claim 1, **characterized in that** the acidic cleaner of group b) contains microbicidal compounds of group b2) selected from saturated or unsaturated fatty acids containing 8 to 22 carbon atoms, preferably from saturated or unsaturated carboxylic acids containing 8 to 11 carbon atoms.

4. A process as claimed in claim 1, **characterized in that** the acidic cleaner of group b) contains microbicidal compounds of group b3) selected from alkyl monophosphonic acid containing 4 to 12 carbon atoms.

5. A process as claimed in claim 1, **characterized in that** the acidic cleaner of group b) contains microbicidal compounds of group b4) selected from ether carboxylic acids with the general formula R-(OC₂H₄)ₙ-OCH₂COOH, in which R is an alkyl group containing 4 to 10 carbon atoms and n is a number of 2 to 8.

6. A process as claimed in one or more of claims 1 to 5, **characterized in that** the acidic cleaner b) is a powder-form, tabletted, paste-form or liquid product which contains a total of 0.1 to 10% by weight of one or more of the microbicidal compounds of groups b1) to b4) and which is used for application as a 0.1 to 2% by weight aqueous solution in the case of a powder and as a 0.2 to 5% by weight aqueous solution in the case of a liquid.

7. A process as claimed in claim 6, **characterized in that** the acidic cleaner b) is a powder-form or tabletted product which contains 20 to 80% by weight of an organic or inorganic substance showing an acidic reaction when dissolved in water, 0.1 to 5% by weight of nonionic surfactants, 0.1 to 5% by weight of one or more microbicidal compounds of groups b1) to b4) and, as the balance to 100% by weight, sodium sulfate and/or other active substances or auxiliaries.

8. A process as claimed in claim 6, **characterized in that** the acidic cleaner b) is a liquid product which contains 20 to 80% by weight of phosphoric acid, sulfuric acid, formic acid, acetic acid, glycolic acid, lactic acid, citric acid and/or methanesulfonic acid as such, as a solution in one another or in the form of an aqueous solution with an acid content of at least 5% by weight, 0.1 to 5% by weight of nonionic surfactants, 0.1 to 5% by weight of one or more microbicidal compounds of groups b1) to b4) and, as the balance to 100% by weight, water or an aqueous solution of other active substances or auxiliaries.

9. A process as claimed in one or more of claims 1 to 8, **characterized in that** the alkaline cleaner of group a) is a powder-form, tabletted, paste-form or liquid product which, in the case of a powder-form product, contains 5 to 45% by weight of builders selected from oligomeric or polymeric phosphates, phosphonates, polyacrylates, nitrilotriacetate, citrate and/or gluconate, up to 30% by weight of silicates, up to 5% by weight each of nonionic surfactants and antifoam agents and, as the balance to 100% by weight, alkali metal carbonates, alkali metal hydroxides and/or other active substances or auxiliaries and, in the case of a liquid product, 5 to 40% by weight of alkali metal hydroxides, up to 15% by weight of silicates, up to 15% by weight of complexing agents, up to 5% by weight each of nonionic surfactants and defoamers and, as the balance to 100% by weight, water or an aqueous solution of other active substances or auxiliaries, powders being used for application as a 0.1 to 2% by weight aqueous solution and liquids as a 0.2 to 5% by weight solution.

## Revendications

1. Procédé pour nettoyer et désinfecter les installations de traite par un nettoyage alcalin et acide, **caractérisé en ce que** l'on nettoie l'installation de traite au moins une fois par jour en alternance avec
a) un nettoyant alcalin et
b) un nettoyant acide doué d'une activité désinfectante, qui contient 0,1 à 15 % en poids - par rapport au nettoyant à diluer dans de l'eau - d'un ou de plusieurs des composés possédant une activité microbicide suivants: b1) tensioactifs anioniques, b2) acides gras, b3) acides alkylphosphoniques et b4) acides éthercarboxyliques,
le nettoyant alcalin a) et le nettoyant acide b) étant exempts d'halogènes, de composés halogénés, d'alkylamines, de composés quaternaires d'ammonium, de composés quaternaires de phosphonium, de peracides et d'aldéhydes et les deux nettoyants étant mis en oeuvre dans une quantité et une concentration telles qu'ils se neutralisent quasiment dans un récipient tampon après l'application.

2. Procédé selon la revendication 1, **caractérisé en ce que** le nettoyant acide du groupe b) contient des tensioactifs microbicides du groupe b1), qui sont sélectionnés parmi les acides sulfoniques aromatiques, les acides alkylsulfoniques, les acides alkyléthersulfoniques, les esters acides d'alcool gras et d'acide sulfurique et les acides gras sulfonés.

3. Procédé selon la revendication 1, **caractérisé en ce que** le nettoyant acide du groupe b) contient des composés microbicides du groupe b2), qui sont sélectionnés parmi les acides gras saturés ou insaturés comportant 8 à 22 atomes de C, de préférence parmi les acides carboxyliques saturés ou insaturés possédant 8 à 11 atomes de C.

4. Procédé selon la revendication 1, **caractérisé en ce que** le nettoyant acide du groupe b) contient des composés microbicides du groupe b3), qui sont sélectionnés parmi les acides alkylmonophosphoniques comportant 4 à 12 atomes de C.

5. Procédé selon la revendication 1, **caractérisé en ce que** le nettoyant acide du groupe b) contient des composés microbicides du groupe b4), qui sont sélectionnés parmi les acides éthercarboxyliques de la formule générale R-(OC₂H₄)ₙ-OCH₂-COOH, dans laquelle R représente un radical alkyle comportant 4 à 10 atomes de carbone et n correspond à un nombre compris dans l'intervalle de 2 à 8.

6. Procédé selon une ou plusieurs des revendications 1 à 5, **caractérisé en ce que** le nettoyant acide b) est un produit en poudre, en comprimé, pâteux ou liquide, qui renferme au total 0,1 à 10 % en poids d'un ou de plusieurs composés microbicides des groupes b1) à b4) et qui est mis en oeuvre dans le cas d'un produit en poudre, en solution aqueuse à 0,1 à 2 % en poids et dans le cas d'un produit liquide, en solution aqueuse à 0,2 à 5 % en poids.

7. Procédé selon la revendication 6, **caractérisé en ce que** le nettoyant acide b) est un produit en poudre ou en comprimés, qui renferme 20 à 80 % en poids d'une substance organique ou inorganique à réaction acide lors de sa dissolution dans l'eau, 0,1 à 5 % en poids de tensioactifs non ioniques, 0,1 à 5 % en poids d'un ou de plusieurs composés microbicides des groupes b1) à b4) et comme reste pour faire 100 % en poids, du sulfate de sodium et/ou d'autres substances actives ou adjuvantes.

8. Procédé selon la revendication 6, **caractérisé en ce que** le nettoyant acide b) est un produit liquide, qui renferme 20 à environ 80 % en poids d'acide phosphorique, sulfurique, formique, acétique, glycolique, lactique, citrique et/ou méthane-sulfonique, dans chaque cas purs, en solution les uns dans les autres ou sous forme de solution aqueuse avec une teneur en acide d'au moins 5 % en poids, 0,1 à 5 % en poids de tensioactifs non ioniques 0,1 à 5 % en poids d'un ou de plusieurs composés microbicides des groupes b1) à b4) et comme reste pour faire 100 % en poids, de l'eau ou une solution aqueuse d'autres substances actives ou adjuvantes.

9. Procédé selon une ou plusieurs des revendications 1 à 8, **caractérisé en ce que** le nettoyant alcalin du groupe a) est un produit en poudre, en comprimé, pâteux ou liquide et dans le cas d'un produit en poudre, contient 5 à 45 % de substances adjuvantes, sélectionnées parmi les phosphates oligomères ou polymères, les phosphonates, les polyacrylates, le nitrilotriacétate, le citrate et/ou le gluconate, jusqu'à 30 % en poids de silicates, jusqu'à 5 % en poids respectivement de tensioactifs non ioniques et d'antimousse, ainsi que comme reste pour faire 100 % en poids, des carbonates de métaux alcalins, des hydroxydes de métaux alcalins et/ou d'autres substances actives ou adjuvantes; dans le cas d'un produit liquide, renferme 5 à 40 % en poids d'hydroxyde de métal alcalin, jusqu'à 15 % en poids de silicates, jusqu'à 15 % en poids de complexants, jusqu'à 5 % respectivement de tensioactifs non ioniques et d'anti-mousse et comme reste pour faire 100 % en poids, de l'eau ou une solution aqueuse d'autres substances actives ou adjuvantes, les produits en poudre étant mis en oeuvre pour l'utilisation en solution aqueuse à 0,1 à 2 % en poids et les produits liquides, en solution à 0,2 à 5 % en poids.
